# EUROPEAN PATENT APPLICATION

(11) **EP 2 131 425 A1**
(43) Date of publication of application: **09.12.2009**
(21) Application number: 08739396.3
(22) Date of filing: 25.03.2008
(51) Int. Cl.: H01M 4/86, H01M 4/88, H01M 8/10

(54) **ELECTRODE CATALYST LAYER FOR FUEL CELL AND METHOD FOR PRODUCING THE SAME**

(30) Priority: 27.03.2007 JP 2007081407
(71) Applicant: Toyota Jidosha Kabushiki Kaisha, Toyota-shi, Aichi 471-8571 (JP)
(72) Inventor: KADOTANI, Satoshi, Toyota-shi Aichi 471-8571 (JP); YAMADA, Nobuhiro, Toyota-shi Aichi 471-8571 (JP); KAWAHARA, Tatsuya, Toyota-shi Aichi 471-8571 (JP); HATANAKA, Tatsuya, Aichi-gun Aichi 480-1192 (JP)
(74) Representative: TBK-Patent
(86) International application number: PCT/JP2008/056282
(87) International publication number: WO 2008/123486

(57) **Abstract**

An electrode catalyst layer for a fuel cell includes a first region and a second region more highly water repellent than the first region. The amount of catalyst per unit area in the first region is smaller than the amount of catalyst per unit area in the second region. The electrode catalyst layer makes it possible to reduce the amount of catalyst contained in the electrode catalyst layers, while avoiding a drop in output voltage of the fuel cell.

## Description

### TECHNICAL FIELD

The present invention relates to an electrode catalyst layer for use in a fuel cell.

### BACKGROUND ART

A typical fuel cell has a plurality of current generating units and a plurality of separators, which are stacked together in alternating fashion. Each current generating unit includes a membrane-electrode assembly that is made up of an electrolyte membrane, and two electrode catalyst layers disposed to either side of the electrolyte membrane.

JP2003-173785A teaches a first catalyst layer in which the distribution of catalyst concentration varies along the thickness direction, and a second catalyst layer in which the distribution of catalyst concentration varies within the plane. Also taught in this publication are a third catalyst layer containing varying levels of a water repellent along the thickness direction, and a fourth catalyst layer containing varying levels of a water repellent within the plane. The publication further teaches a fifth catalyst layer containing varying levels of a hydrophilic agent along the thickness direction, and a sixth catalyst layer containing varying levels of a hydrophilic agent within the plane.

Other known fuel cells of this type have been disclosed, for example, in JP2006-40767A, JP2006-134886A, and JP2006-228501A.

A catalyst is contained in the electrode catalyst layers, and it is preferable for the amount of catalyst to be kept at a minimum. However, reducing the amount of the catalyst will typically have the result of giving rise to a drop in output voltage of the fuel cell.

### DISCLOSURE OF THE INVENTION

This invention is intended to address the problems of the prior art discussed above, and has as an object to reduce the amount of catalyst contained in the electrode catalyst layers, while avoiding a drop in the output voltage of the fuel cell.

In order to attain at least a part of the object, a first device of the present invention provides an electrode catalyst layer for a fuel cell, comprising a first region and a second region more highly water repellent than the first region, wherein the amount of catalyst per unit area in the first region is smaller than the amount of catalyst per unit area in the second region.

In a fuel cell containing this electrode catalyst layer, water will readily diffuse in the first region, while the reactant gas will readily diffuse in the second region. Because the amount of catalyst per unit of planar area in the second region, in which the level of diffusion of the reactant gas is relatively high, is greater than the amount of catalyst per unit of planar area in the first region, in which the level of diffusion of the reactant gas is relatively low, the reactant gas can be utilized efficiently in the electrochemical reaction taking place in the second region. That is, where a fuel cell is constructed using this electrode catalyst layer, it will be possible to reduce the amount of catalyst contained in the electrode catalyst layer, while avoiding a drop in the output voltage of the fuel cell.

The second region may optionally undergo treatment to enhance water repellency. Alternatively or concomitantly, the first region may undergo treatment to enhance hydrophilicity.

A second device of the present invention provides a membrane electrode assembly for a fuel cell, comprising an electrolyte membrane and a first electrode catalyst layer furnished at first face of the electrolyte membrane and a second electrode catalyst layer furnished at second face of the electrolyte membrane, wherein at least one of the first electrode catalyst layer and the second electrode catalyst layer is any one of the electrode catalyst layers described above.

This membrane electrode assembly includes the electrode catalyst layer that constitutes the first device of the present invention. Consequently, where a fuel cell is constructed using this electrode catalyst layer, it will be possible to reduce the amount of catalyst contained in the electrode catalyst layer, while avoiding a drop in the output voltage of the fuel cell.

A method of the present invention provides a method of producing an electrode catalyst layer for a fuel cell, comprising the steps of (a) preparing a first dispersion that contains a catalyst, and a second dispersion that contains the catalyst and (b) applying the first dispersion onto a support in order to produce a first region contained in the electrode catalyst layer, and applying the second dispersion onto the support in order to produce a second region contained in the electrode catalyst layer, wherein the second regions have higher water repellency than the first regions, wherein application of the first dispersion and application of the second dispersion are carried out such that the amount of catalyst per unit area in the first region is smaller than the amount of catalyst per unit area in the second region.

Employing this method, the electrode catalyst layer according to the present invention can be fabricated. By subsequently constructing a fuel cell using this electrode catalyst layer, it will be possible to reduce the amount of catalyst contained in the electrode catalyst layer, while avoiding a drop in the output voltage of the fuel cell.

In preferred practice, in the above method, the coating weight of the first dispersion on a per unit area basis will be less than the coating weight of the second dispersion on a per unit area basis, so that the amount of catalyst on a per unit area basis in the first region is less than the amount of catalyst in the second region on a per unit area basis.

Where the concentration of the catalyst in the first dispersion and the concentration of the catalyst in the second dispersion are equal, coating weight in each region and the amount of catalyst in the region will be proportional. Consequently, the amount of catalyst on a per unit area basis in the two regions can be varied by varying the coating weight on a per unit area basis of the two dispersions in the manner described above. As regards the composition of the dispersions, the basic composition can be the same, and is adjustable simply by opting to include or omit hydrophilic material and/or water repellent material, or through proper adjustment of the added amount thereof.

The invention may be reduced to practice in various other forms, for example, an electrode catalyst layer; a membrane electrode assembly that includes the electrode catalyst layer; a fuel cell that includes the membrane electrode assembly; or methods of producing these.

### BRIEF DESCRIPTION OF THE DRAWINGS

FIG. 1 is an illustration depicting in model form an internal structure of a fuel cell 100;
FIG. 2 is an illustration depicting in enlarged view a current generating unit 110 of FIG. 1;
FIG. 3 is an illustration depicting in enlarged view a relationship between a current generating unit 110 and separators 120 of FIG. 1;
FIG. 4 is an illustration depicting a current generating unit 110A according to a first modified embodiment;
FIG. 5 is an illustration depicting a current generating unit 110B according to a second modified embodiment;
FIG. 6 is a flowchart depicting a fabrication procedure for a current generating unit 110 (FIG. 2);
FIG. 7 is an illustration depicting characteristics of electrode catalyst layers of five types of current generating units U1 to U5 used in tests;
FIGs. 8A to 8D are illustrations showing the compositions of the catalyst inks given in FIG. 7; and
FIGs. 9A to 9C show test results indicating voltage-current relationships for the five types of current generating units U1 to U5.

### BEST MODE FOR CARRYING OUT THE INVENTION

Next, the modes of the present invention will be described based on certain preferred embodiments, presented in the following order.
A. Configuration of Fuel Cell:
B. Configuration of Current Generating Unit:
C. Current Generating Unit Fabrication Method:
D. Test Results:

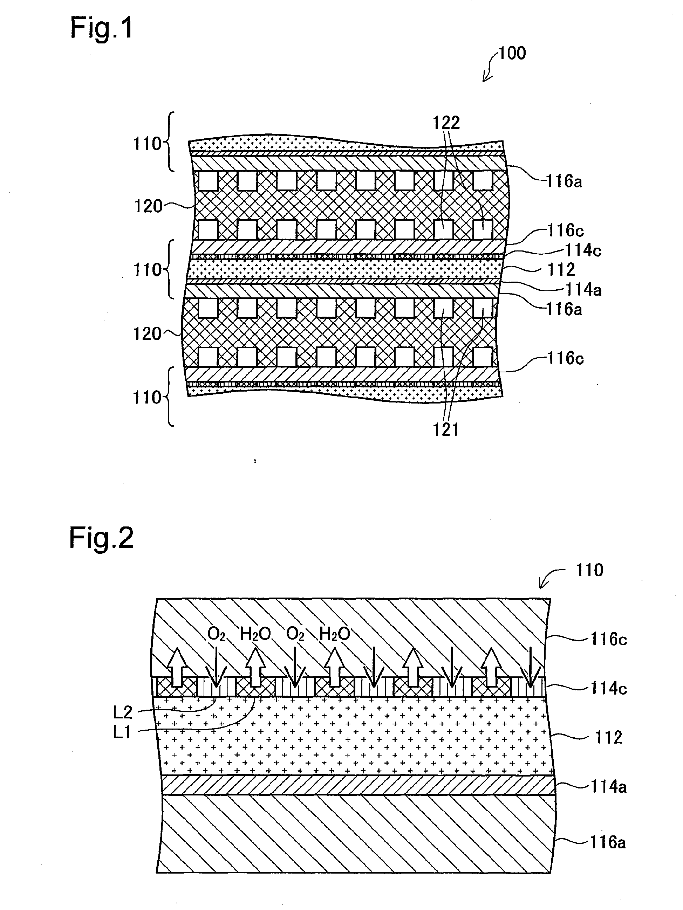

FIG. 1 is an illustration depicting in model form an internal structure of a fuel cell 100. This particular fuel cell 100 is a fuel cell of solid polymer type. As shown, the fuel cell 100 includes a multiplicity of current generating units 110 and a multiplicity of separators 120, stacked in alternating fashion. While not depicted in the drawing, the separators are typically furnished with coolant passages.

The current generating unit 110 includes an electrolyte membrane 112; at one face of the electrolyte membrane 112 there are disposed a first electrode catalyst layer (anode) 114a and a first gas diffusion layer 116a in that order, while at the other face of the electrolyte membrane 112 there are disposed a second electrode catalyst layer (cathode) 114c and a second gas diffusion layer 116c in that order. A first separator 120 is positioned in contact with the first gas diffusion layer 116a at one side of the current generating unit 110, while a second separator 120 is positioned in contact with the second gas diffusion layer 116c at the other side of the current generating unit 110. A plurality of channels are formed on both sides of each separator 120, defining anode-side gas passages 121 between the first separator 120 and the first gas diffusion layer 116a of the current generating unit 110, and defining cathode-side gas passages 122 between the second separator 120 and the second gas diffusion layer 116c of the current generating unit 110.

A fuel gas containing hydrogen gas supplied by a fuel gas supply part (not shown) circulates through the anode-side gas passages 121, while an oxidant gas (air) containing oxygen gas supplied by an oxidant gas supply part (not shown) circulates through the cathode-side gas passages 122. The fuel gas and the oxidant gas are utilized in the electrochemical reaction taking place in the current generating unit 110.

In the present embodiment, a block that includes the current generating unit 110, the section containing the anode-side gas passages 121 in the first separator 120, and the section containing the cathode-side gas passages 122 in the second separator 120 together correspond to a single unit cell. That is, in the present embodiment, the fuel cell 100 includes a multiplicity (e.g. 100) of unit cells.

As the electrolyte membrane 112 there is employed, for example, a membrane made of a solid polymer material such as a fluororesin having sulfonic groups. The electrode catalyst layers 114a, 114c contain, for example, carbon particles supporting a catalyst such as platinum (Pt). The gas diffusion layers 116a, 116c are made of material that is gas-permeable and electrically conductive; carbon paper may be used for example. The separators 120 are made of metal or carbon that is electrically conductive but not gas-permeable. In some instances however, a gas-permeable porous material may be used.

In the present embodiment, the electrolyte membrane 112 and the two electrode catalyst layers 114a, 114c positioned to either side of the electrolyte membrane correspond to the membrane electrode assembly (MEA) in the present invention.

### B. Configuration of Current Generating Unit:

FIG. 2 is an illustration depicting in enlarged view a current generating unit 110 of FIG. 1. As illustrated, the first electrode catalyst layer (anode) 114a includes a region of a single type. On the other hand, the second electrode catalyst layer (cathode) 114c includes regions L1, L2 of two types. Specifically, the second electrode catalyst layer 114c includes a plurality of first regions L1 and a plurality of second regions L2, arranged in an alternating stripe pattern.

The first regions L1 are regions that are more hydrophilic than the second regions L2 (conversely, the second regions L2 are regions that are more water repellent than the first regions L1). Herein, these first regions L1 shall also be termed "hydrophilic regions," and the second regions L2 shall also be termed "water repellent regions."

According to the present embodiment, the hydrophilic regions L1 of the second electrode catalyst layer 114c undergo treatment to enhance hydrophilicity, while the water repellent regions L2 undergo treatment to enhance water repellency. The first electrode catalyst layer 114a does not undergo any treatment for either enhanced hydrophilicity or water repellency. That is, according to the present embodiment, the hydrophilic regions L1 of the second electrode catalyst layer 114c are more hydrophilic than the first electrode catalyst layer 114a, and the water repellent regions L2 are more water repellent than the first electrode catalyst layer 114a.

The water repellent regions L2 also contain a greater amount of the catalyst than do the hydrophilic regions L1. More specifically, the amount of catalyst on a per unit area basis in the water repellent regions L2 are greater than the amount of catalyst in the hydrophilic regions L1 on a per unit area basis.

It is common knowledge that, as the electrochemical reaction proceeds in the current generating unit 110, consumption of oxygen gas in the supplied oxidant gas and evolution of liquid water will take place at the second electrode catalyst layer (cathode) 114c. This water is also referred to as "evolving water." The evolving water will be expelled out from the fuel cell 100 together with the oxidant gas passing through the cathode-side gas passages 122 (FIG. 1). However, in the event that an excessive level of water remains inside the second electrode catalyst layer 114c, there will not be sufficient inflow of oxidant gas into the second electrode catalyst layer 114c, and the electrochemical reaction will be prevented from proceeding.

As noted, in the present embodiment, the second electrode catalyst layer 114c includes regions L1, L2 of two different types with different levels of water repellency (or hydrophilicity). For this reason, water that has evolved in the water repellent regions L2 will flow into the hydrophilic regions L1. Water that has flowed into the hydrophilic regions L1, as well as water that has evolved in the hydrophilic regions L1, will then be expelled from the hydrophilic regions L1 into the second gas diffusion layer 116c, and will subsequently be expelled out from the fuel cell 100 together with the oxidant gas passing through the cathode-side gas passages 122. The oxidant gas circulating through the cathode-side gas passages 122 will flow more easily into the water repellent regions L2 which have lower evolving water content than into the hydrophilic regions L1 which have higher evolving water content. That is, the hydrophilic regions L1 will function as passages through which evolved water predominantly passes, while the water repellent regions L2 will function as passages through which oxidant gas predominantly passes. In other words, the second electrode catalyst layer 114c is divided into evolving water expulsion passages and oxidant gas inflow passages. For this reason, according to the present embodiment, expulsion of evolving water and supply of oxidant gas can take place efficiently.

Moreover, as mentioned above, since the amount of catalyst per unit area in the water repellent regions L2 is greater than the amount of catalyst per unit area in the hydrophilic regions L1, oxidant gas inflowing to the water repellent regions L2 will be utilized efficiently in the electrochemical reaction. Specifically, the reaction efficiency of oxidant gas can be enhanced in the water repellent regions L2, which have relatively high oxidant gas diffusion levels, while at the same time reducing the amount of catalyst per unit area in the hydrophilic regions L1, which have relatively low oxidant gas diffusion levels.

As noted, the hydrophilic regions L1 and the water repellent regions L2 are provided in a stripe pattern. In particular, according to the present embodiment, the hydrophilic regions L1 and the water repellent regions L2 are disposed so as to conform to the contours of the separators 120, more specifically, so as to conform to the contours of the cathode-side gas passages 122.

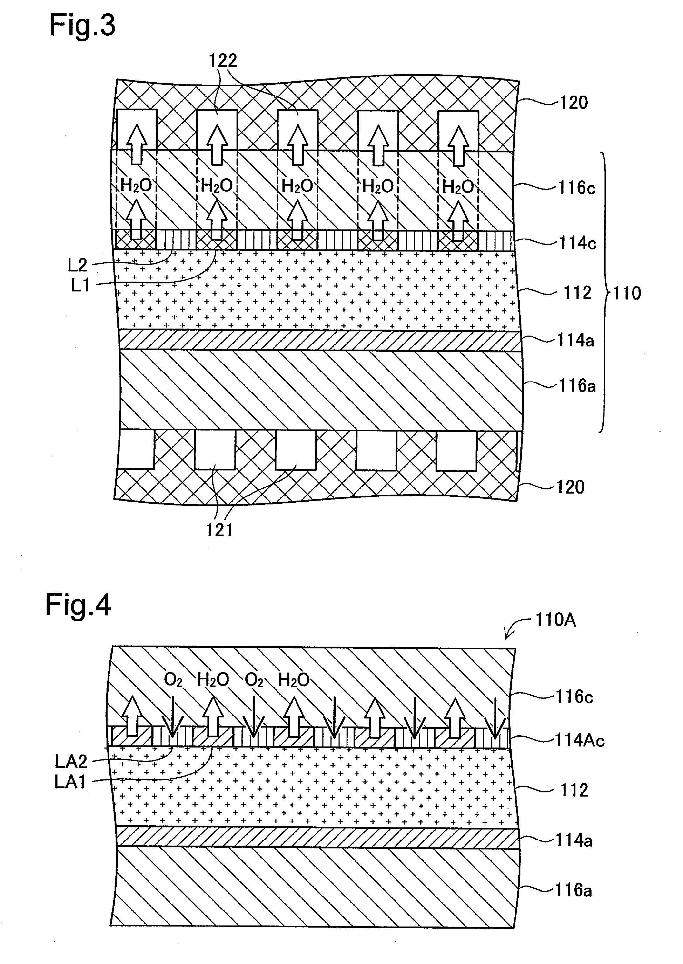

FIG. 3 is an illustration depicting in enlarged view a relationship between a current generating unit 110 and separators 120 of FIG. 1. As shown, the two types of regions L1, L2 are disposed such that the hydrophilic regions L1 are situated at locations corresponding to the cathode-side gas passages 122. With this arrangement, evolving water inside the hydrophilic regions L1 will readily move towards the corresponding cathode-side gas passages 122 via the second gas diffusion layer 116c, so that the evolving water can be efficiently discharged into the cathode-side gas passages 122.

As shown in FIG. 3, in the present embodiment, the width of the hydrophilic regions L1 substantially coincides with the width of the cathode-side gas passages 122; however, this width could instead be slightly smaller than the width of the cathode-side gas passages 122. It is thought that doing so will make it easier for oxidant gas circulating through the cathode-side gas passages 122 to inflow via the second gas diffusion layer 116c into the two water repellent regions L2 that are situated to either side of the corresponding hydrophilic regions L1. In this way, the hydrophilic regions and the water repellent regions may be arrayed so that the hydrophilic regions are situated at locations corresponding to the cathode-side gas passages.

In the present embodiment, the two types of regions L1, L2 are arrayed in a stripe pattern, but could instead be arrayed in a grid pattern or in a dot pattern (i.e. a shape whereby one of the two types of regions L1, L2 is encircled by the other).

Additionally, whereas in the present embodiment the hydrophilic regions L1 and the water repellent regions L2 are included in the second electrode catalyst layer 114c, it would be acceptable for regions of relatively high hydrophilicity and regions of relatively high water repellency to be included in the second gas diffusion layer 116c too. In this case, the regions of relatively high hydrophilicity included in the second gas diffusion layer would be disposed at locations that correspond to the hydrophilic regions of the second electrode catalyst layer 114c, and the regions of relatively high water repellency included in the second gas diffusion layer would be disposed at locations that correspond to the water repellent regions of the first electrode catalyst layer 114c.

### B-1. First Modified Embodiment of Current Generating Unit:

FIG. 4 is an illustration depicting a current generating unit 110A according to a first modified embodiment, and corresponds to FIG. 2. While FIG. 4 is substantially similar to FIG. 2, the second electrode catalyst layer 114Ac has been modified.

The second electrode catalyst layer 114Ac includes a plurality of hydrophilic regions LA1 and a plurality of water repellent regions LA2 arrayed in an alternating stripe pattern. The amount of catalyst per unit area in the water repellent regions LA2 is greater than the amount of catalyst per unit area in the hydrophilic regions LA1.

However, in contrast to the hydrophilic regions L1 of FIG. 2, the hydrophilic regions LA1 have not undergone treatment to enhance hydrophilicity, whereas the water repellent regions LA2, like the water repellent regions L2 of FIG. 2, have undergone treatment to enhance water repellency. That is, the hydrophilic regions LA1 of the second electrode catalyst layer 114Ac have a level of hydrophilicity comparable to that of the first electrode catalyst layer 114a, whereas the water repellent regions LA2 have higher water repellency than the first electrode catalyst layer 114a.

Utilization of the current generating unit 110A depicted in FIG. 4 will also allow the reaction efficiency of oxidant gas in the water repellent regions LA2 to be enhanced, while at the same time reducing the amount of catalyst per unit area in the hydrophilic regions LA1.

### B-2. Second Modified Embodiment of Current Generating Unit:

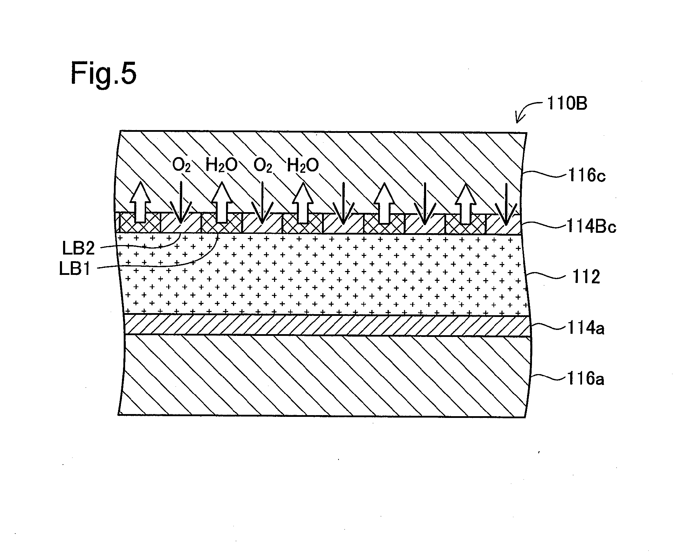

FIG. 5 is an illustration depicting a current generating unit 110B according to a second modified embodiment, and corresponds to FIG. 2. While FIG. 5 is substantially similar to FIG. 2, the second electrode catalyst layer 114Bc has been modified.

The second electrode catalyst layer 114Bc includes a plurality of hydrophilic regions LB1 and a plurality of water repellent regions LB2 arrayed in an alternating stripe pattern. The amount of catalyst per unit area in the water repellent regions LB2 is greater than the amount of catalyst per unit area in the hydrophilic regions LB1.

However, whereas like the hydrophilic regions L1 of FIG. 2 the hydrophilic regions LB1 have undergone treatment to enhance hydrophilicity, unlike the water repellent regions L2 of FIG. 2 the water repellent regions LB2 have not undergone treatment to enhance water repellency. That is, the hydrophilic regions LB1 of the second electrode catalyst layer 114Bc have a level of hydrophilicity higher than that of the first electrode catalyst layer 114a, whereas the water repellent regions LB2 have water repellency comparable to that of the first electrode catalyst layer 114a.

Utilization of the current generating unit 110B depicted in FIG. 5 will also allow the reaction efficiency of oxidant gas in the water repellent regions LB2 to be enhanced, while at the same time reducing the amount of catalyst per unit area in the hydrophilic regions LB1.

### C. Current Generating Unit Fabrication Method:

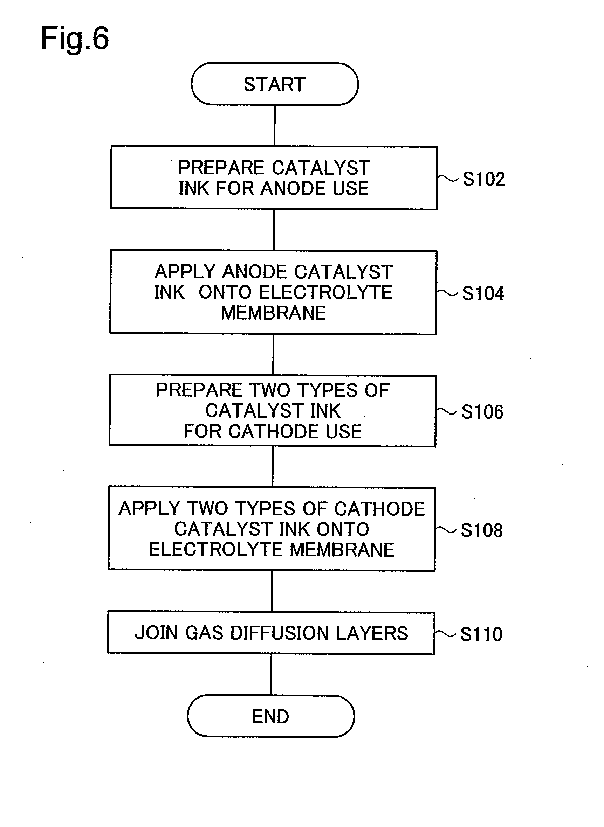

FIG. 6 is a flowchart depicting a fabrication procedure for a current generating unit 110 (FIG. 2).

In Step S102, one type of catalyst ink for anode use is prepared. A catalyst ink refers to a suspension (dispersion) containing a catalyst. The catalyst ink includes a catalyst-supporting carbon supporting the catalyst (e.g. platinum); an electrolyte (e.g. NAFION, a trademark of DuPont Corp.); and a solvent (e.g. water, or an alcohol such as ethanol).

In Step S104, the anode catalyst ink is applied to one face of the electrolyte membrane 112. In the present embodiment, the catalyst ink is applied using an ink jet device. Through a subsequent vacuum drying process, the solvent contained in the coating layer is dried out. By this process the first electrode catalyst layer 114a is formed on one face of the electrolyte membrane 112.

In Step S106, two types of catalyst ink for cathode use are prepared. The first type of catalyst ink and the second type of catalyst ink differ from one another in composition. The first type of catalyst ink is a catalyst ink for producing the hydrophilic regions L1 of the second electrode catalyst layer 114c, while the second type of catalyst ink is a catalyst ink for producing the water repellent regions L2.

Like the catalyst ink for anode use, the first and second types of catalyst ink for cathode use include a catalyst-supporting carbon, an electrolyte, and a solvent. The first type of catalyst ink additionally includes an adjuvant for enhancing hydrophilicity (hydrophilic agent). Examples of hydrophilic agents are metal oxides such as silica (SiO₂), titania (TiO₂), or zirconia (ZrO₂); or hydrophilic resins such as polyvinyl alcohol or sodium acrylate. The second type of catalyst ink, on the other hand, additionally includes an adjuvant for enhancing water repellency (water repellent). Examples of water repellents are fluorine polymer resins such as PTFE (polytetrafluoroethylene).

In Step S108, the first type of catalyst ink, together with the second type of catalyst ink, are applied to the other face of the electrolyte membrane 112. Using an inkjet device, the first catalyst ink and the second catalyst ink are applied in a stripe pattern and dried. A vacuum drying process is subsequently carried out if necessary. Through this process the second electrode catalyst layer 114c that includes hydrophilic regions L1 and water repellent regions L2 arrayed in a stripe pattern is formed on the other face of the electrolyte membrane 112.

In the present embodiment, the catalyst-supporting carbon contained in the first type of catalyst ink and in the second type of catalyst ink have identical catalyst support ratios. For this reason, the coating weight of the second type of catalyst ink for producing the water repellent regions is set to a larger value than the coating weight of the first type of catalyst ink for producing the hydrophilic regions L1. As a result, the amount of catalyst per unit area in the water repellent regions L2 will be greater than the amount of catalyst per unit area in the hydrophilic regions L1.

The processes of Steps S106 and S108 may be optionally carried out prior to the processes of Steps S102 and S104. Alternatively, the process of Step S106 may be carried out prior to the process of Step S104.

In Step S110, the two gas diffusion layers 116a, 116c are joined to the two electrode catalyst layers 114a, 114c. In the present embodiment, joining is carried out using a hot press method.

The process of FIG. 6 affords a current generating unit 110, and a multiplicity of which current generating units 110 are then used to produce the fuel cell 100.

According to the present embodiment, application of the catalyst inks is carried out using an inkjet device, but a dispenser device or screen printing device could be used instead.

The present embodiment teaches adding a hydrophilic agent to the catalyst ink in order to produce the hydrophilic regions L1, some other process for enhancing hydrophilicity could be carried out instead. For example, the carbon particles supporting the catalyst could undergo chemical modification with hydrophilic groups (e.g. hydroxy groups) in order to enhance hydrophilicity.

Similarly, while the present embodiment teaches adding a water repellent to the catalyst ink in order to produce the water repellent regions L2, some other process for enhancing water repellency could be carried out instead. For example, the carbon particles supporting the catalyst could undergo chemical modification with hydrophobic groups (e.g. alkyl groups), or undergo fluorination, in order to enhance water repellency.

The current generating units 110A, 110B of the modified embodiments (FIGS. 4, 5) are fabricable in a similar manner to the current generating unit 110. However, in the case of fabricating the current generating unit 110A or 110B of the modified embodiments, the two types of catalyst ink for cathode use prepared in Step S106 will be changed. In the case of fabricating the current generating unit 110A of FIG. 4 for example, a catalyst ink devoid of an added hydrophilic agent may be used as the first type of catalyst ink for producing the hydrophilic regions LA1, and a catalyst ink containing an added water repellent may be used as the second type of catalyst ink for producing the water repellent regions LA2. Similarly, in the case of fabricating the current generating unit 110B of FIG. 5, a catalyst ink containing an added hydrophilic agent may be used as the first type of catalyst ink for producing the hydrophilic regions LB1, and a catalyst ink devoid of an added water repellent may be used as the second type of catalyst ink for producing the water repellent regions LB2.

### D. Test Results:

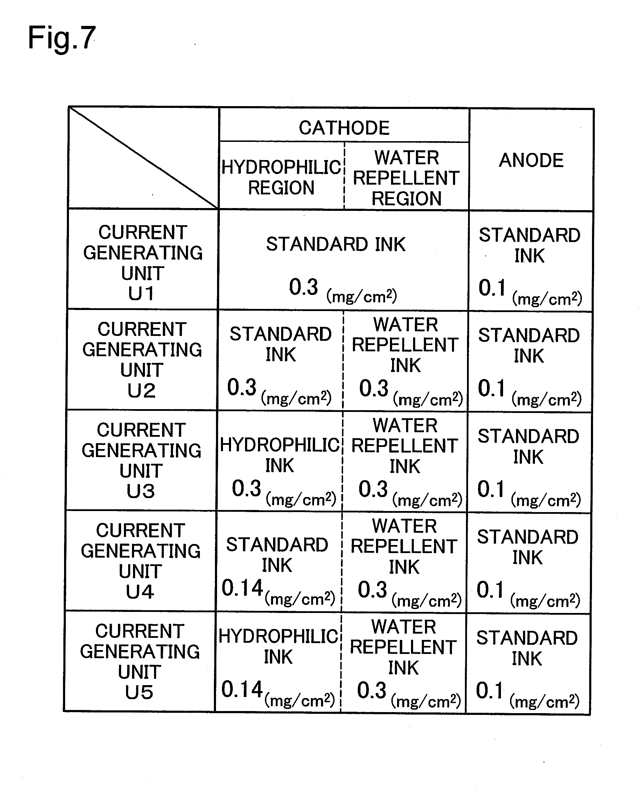

Five types of current generating units were fabricated and then tested. FIG. 7 is an illustration depicting characteristics of the electrode catalyst layers of the five types of current generating units U1 to U5 used in the tests. The fourth current generating unit U2 corresponds to the power unit 110A of FIG. 4, and the fifth current generating unit U5 corresponds to the power unit 110 of FIG. 2.

The first electrode catalyst layers (anodes) 114a of the current generating units U1 to U5 are identical to one another, and were produced using a standard ink for anode use. A standard ink refers to a catalyst ink that has not undergone treatment to enhance hydrophilicity or water repellence.

The second electrode catalyst layers (anodes) 114c of the current generating units U1 to U5 differ from one another, and were produced using one type or two types of ink. Specifically, the cathode 114c of the first current generating unit U1 was produced using a standard ink for cathode use. In the cathodes 114c of the second and fourth current generating units U2, U4, the hydrophilic regions were produced using the standard ink for cathode use, while the water repellent regions were produced using water repellent ink. In the cathodes 114c of the third and fifth current generating units U3, U5, the hydrophilic regions were produced using hydrophilic ink, while the water repellent regions were produced using water repellent ink. Hydrophilic ink refers to a catalyst ink that has undergone treatment to enhance hydrophilicity, and water repellent ink refers to a catalyst ink that has undergone treatment to enhance water repellence.

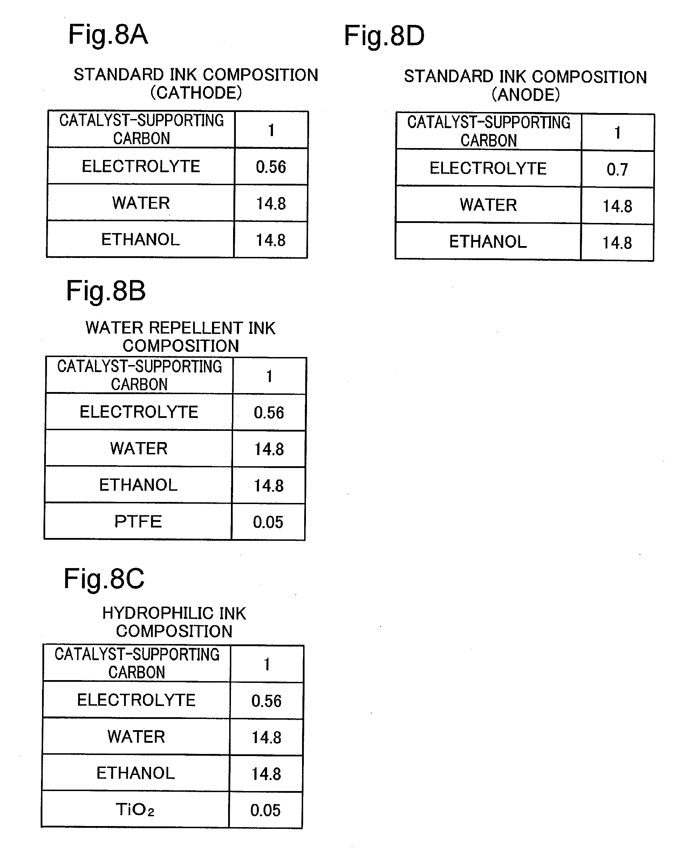

FIGs. 8A to 8D are illustrations showing the compositions of the catalyst inks given in FIG. 7. In FIGs. 8A to 8D, compositions are expressed in terms of ratio by weight.

FIGs. 8A to 8C show the compositions of the catalyst inks for cathode use. Specifically, FIG. 8A shows the composition of the standard ink; FIG. 8B shows the composition of the water repellent ink; and FIG. 8C shows the composition of the hydrophilic ink. As will be appreciated from a comparison of FIGs. 8A to 8C, the water repellent ink composition is substantially similar to the standard ink composition, except that PTFE (polytetrafluoroethylene) is added. The hydrophilic ink composition is also substantially similar to the standard ink composition, except that TiO₂ (titania) is added.

FIG. 8D shows the composition of the standard ink for anode use. As will be appreciated from a comparison of FIGs. 8A and 8D, the composition of the standard ink for anode use is substantially similar to the composition of the standard ink for cathode use, except that the weight ratio of the electrolyte is different.

The catalyst-supporting carbon of FIGs. 8A to 8D supports a platinum (Pt) catalyst, and the catalyst support ratio is the same for each.

The current generating units U1 to U5 were fabricated as follows. First, the one type of standard ink for anode use shown in FIG. 7 was prepared, and one type or two types of catalyst ink for cathode use were prepared. Each catalyst ink was prepared by mixing and stirring the materials indicated in FIGs. 8A to 8D, and dispersing them for 20 minutes using an ultrasonic homogenizer. This dispersion process was carried out in order to uniformly disperse the catalyst-supporting carbon within the suspension.

Next, anodes were formed on the electrolyte membranes using an inkjet device. As indicated in FIG. 7, for the current generating units U1 to U5, the coating weight of the standard ink for anode use was established such that the amount of catalyst (amount of Pt) per unit area was 0.1 mg/cm².

Cathodes were formed on the electrolyte membranes using an inkjet device. As indicated in FIG. 7, for the first current generating unit U1, the coating weight of the standard ink for cathode use was established such that the amount of catalyst (amount of Pt) per unit area was 0.3 mg/cm². For the current generating units U2 to U5, the two types of catalyst ink were applied at 1 mm pitch so as to produce hydrophilic regions and water repellent regions in a stripe pattern. Specifically, for the second current generating unit U2, the coating weight both of the standard ink for cathode use and of the water repellent ink was established such that the amount of catalyst (amount of Pt) per unit area was 0.3 mg/cm². For the third current generating unit U3, the coating weight both of the standard ink for cathode use and of the water repellent ink was established such that the amount of catalyst (amount of Pt) per unit area was 0.3 mg/cm². For the fourth current generating unit U4, the coating weight of the standard ink for cathode use and of the water repellent ink was established such that the amount of catalyst (amount of Pt) per unit area was 0.14 mg/cm² and 0.3 mg/cm² respectively. For the fifth current generating unit U5, the coating weight of the standard ink for cathode use and of the water repellent ink was established such that the amount of catalyst (amount of Pt) per unit area was 0.14 mg/cm² and 0.3 mg/cm² respectively.

Finally, using a hot press method, the first gas diffusion layer 116a and the second gas diffusion layer 116c were joined respectively to the first electrode catalyst layer (anode) 114a and the second electrode catalyst layer (cathode) 114c. Hot pressing was carried out for three minutes under conditions of 140° C, 4 MPa.

Through the process described above, the five types of current generating units U1 to U5 were obtained. The mean amount of catalyst (amount of Pt) per unit area in the cathodes of the first to third current generating units U1 to U3 was 0.3 mg/cm², while the mean amount of catalyst (amount of Pt) per unit area in the cathodes of the fourth and fifth current generating units U4 and U5 was 0.22 mg/cm² (= 0.14 + 0.3/2).

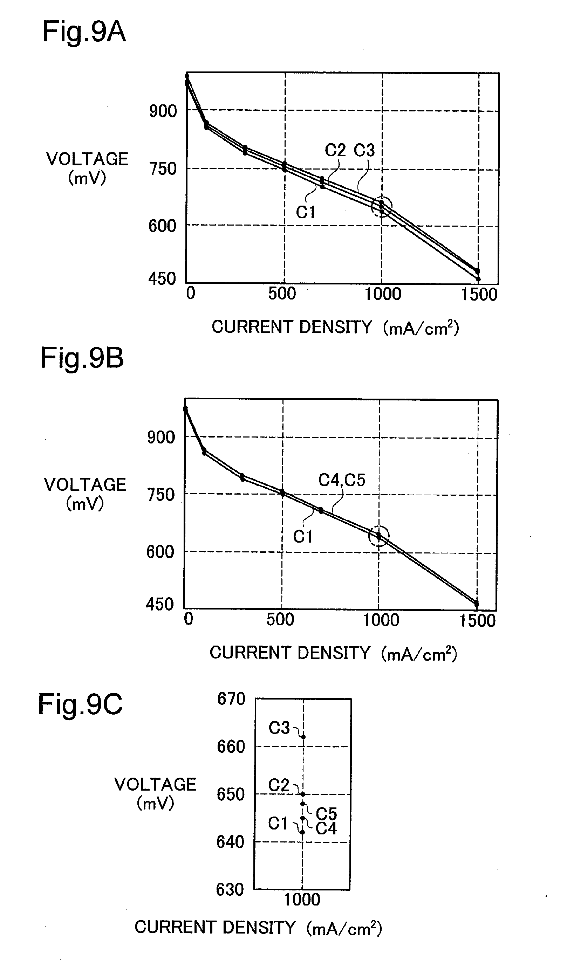

FIGs. 9A to 9C show test results indicating voltage-current relationships for the five types of current generating units U1 to U5. In FIGs. 9A to 9C, the horizontal axis shows current density (mA/cm²) and the vertical axis shows output voltage (mV) of the current generating unit.

FIG. 9A shows curves C1, C2, C3 representing voltage-current characteristics of the first, second, and third current generating units U1, U2, U3. FIG. 9B shows curves C1, C4, C5 representing voltage-current characteristics of the first, fourth, and fifth current generating units U1, U4, U5. The same curve C1 is shown in FIGs. 9A and 9B. The curves C4, C5 shown in FIG. 9B substantially overlap. Fig. 9C depicts in enlarged view the area encircled by the dot and dash line in FIGs. 9A and 9B. This is specifically the voltage measurement point of the five types of current generating units U1 to U5 taken at current density of 1000 mA/cm².

As shown in FIG. 7, the amount of catalyst in the cathodes of the second and third current generating units U2, U3 is the same. However, as shown in FIGs. 9A and 9C, at relatively high current density the output voltage of the third current generating unit U3 was higher than the output voltage of the second current generating unit U2. Similarly, as shown in FIG. 7, the amount of catalyst in the cathodes of the fourth and fifth current generating units U4, U5 is the same. However, as shown in FIGs. 9B and 9C, at relatively high current density the output voltage of the fifth current generating unit U5 was higher than the output voltage of the fourth current generating unit U4. This is due to the fact that the hydrophilic regions of the cathodes of the third and fifth current generating units U3, U5 were formed by hydrophilic ink containing an added hydrophilic agent, whereas the hydrophilic regions of the cathodes of the second and fourth current generating units U2, U4 were formed by standard ink with no added hydrophilic agent (see FIG. 7).

As shown in FIG. 7, the amount of catalyst contained in the cathodes of the first to third current generating units U1 to U3 is the same. However, as shown in FIGs 9A and 9C, at relatively high current density the output voltage of the second and third current generating units U2, U3 was higher than the output voltage of the first current generating unit U1. This is due to the fact that while the cathode of the first current generating unit U1 does not include hydrophilic regions and water repellent regions, the cathodes of the second and third current generating units U2, U3 include hydrophilic regions and water repellent regions (see FIG. 7).

Also, as indicated in FIG. 7 the amount of catalyst in the cathodes of the fourth and fifth current generating units U4, U5 is smaller than the amount of catalyst in the first current generating unit U1. Specifically, as noted previously, the mean amount of catalyst per unit area in the cathodes of the fourth and fifth current generating units U4, U5 is 0.22 mg/cm² (= 0.14 + 0.3/2), which is about 30% less than the mean amount of catalyst per unit area in the cathodes of the first to third current generating units U1 to U3 (0.3 mg/cm²). However, as shown in FIGs. 9B and 9C, at relatively high current density the output voltage of the fourth and fifth current generating units U4, U5 was somewhat higher than the output voltage of the first current generating unit U1. This is due to the fact that while the cathode of the first current generating unit U1 does not include hydrophilic regions and water repellent regions, the cathodes of the fourth and fifth current generating units U4, U5 include hydrophilic regions and water repellent regions (see FIG. 7). Based on these results it can be said that by producing hydrophilic regions and water repellent regions in the fourth and fifth current generating units U4, U5, and adjusting the amount of catalyst in these regions, it becomes possible to considerably reduce the amount of catalyst while at the same time avoiding a drop in output voltage of the current generating unit.

As described above, according to the present embodiment, water will readily diffuse in the hydrophilic regions L1 of the second electrode catalyst layer 114c, while reactant gases will readily diffuse in the water repellent regions L2. Because the amount of catalyst per unit area in the water repellent regions L2, which have relatively high reactant gas diffusion, is greater than the amount of catalyst per unit area in the hydrophilic regions L1, which have relatively low reactant gas diffusion, the reactant gases can be utilized efficiently for the electrochemical reaction in the water repellent regions L2. That is, it will be possible to reduce the amount of catalyst contained in the second electrode catalyst layer 114c, while avoiding a drop in output voltage of the fuel cell 100. This is an advantage in that considerable reduction in cost of the fuel cell 100 will be possible, particularly in cases where a noble metal catalyst (e.g. platinum (Pt)) is employed as the catalyst.

The invention is in no way limited to the embodiments set forth herein, and without departing from the spirit of the invention may be reduced to practice in various other modes, such as the following modifications for example.

(1) In the preceding embodiments, the catalyst support ratio of the catalyst-supporting carbon contained in the first type of catalyst ink (the first support ratio) and the catalyst support ratio of the catalyst-supporting carbon contained in the second type of catalyst ink (the second catalyst ratio) are the same. For this reason, in the preceding embodiment, the amount of catalyst per unit area in the hydrophilic regions and in the water repellent regions is changed by varying the coating weight of the first type of catalyst ink and of the second type of catalyst ink.

However, this first support ratio and second support ratio may differ from one another. In this case, the amount of catalyst per unit area in the hydrophilic regions and of the water repellent regions can be varied, despite the coating weight of the first type of catalyst ink and the coating weight of the second type of catalyst ink being the same. Specifically, where the first support ratio has been set lower than the second support ratio, the amount of catalyst per unit area in the hydrophilic regions can be made smaller than the amount of catalyst per unit area in the water repellent regions, despite the coating weights of the two types of catalyst ink being substantially identical.

In general, it will be sufficient for the amount of catalyst per unit area in the hydrophilic regions to be smaller than the amount of catalyst per unit area in the water repellent regions.

(2) In the preceding embodiments, the electrode catalyst layers 114a, 114c are produced on the electrolyte membrane 112 through application of catalyst ink directly onto the electrolyte membrane 112; however, it would be possible to instead produce the electrode catalyst layer on the electrolyte membrane by applying the catalyst ink onto another support, and subsequently bonding the coating layer (electrode catalyst layer) on the support onto the electrolyte membrane 112. As the support for this purpose there could be used a film (sheet) made of a fluororesin such as polytetrafluoroethylene (PTFE), for example. In this case, the support (sheet) would be peeled off subsequent to bonding of the coating layer (electrode catalyst layer).

Where a support other than the electrolyte membrane itself is used in the above manner, it will be preferable to make the first support ratio and the second support ratio different, as described above. By so doing, it will be possible to make the thickness of the hydrophilic regions and the thickness of the water repellent regions substantially the same, by making the coating weight of the first type of catalyst ink and the coating weight of the second type of catalyst ink substantially the same.

## Claims

1. An electrode catalyst layer for a fuel cell, comprising:
a first region; and
a second region more highly water repellent than the first region;
wherein the amount of catalyst per unit area in the first region is smaller than the amount of catalyst per unit area in the second region.

2. The electrode catalyst layer in accordance with claim 1 wherein
the second region has undergone treatment for enhanced water repellency.

3. The electrode catalyst layer in accordance with claim 1 or 2 wherein
the first region has undergone treatment for enhanced hydrophilicity.

4. A membrane electrode assembly for a fuel cell, comprising:
an electrolyte membrane;
a first electrode catalyst layer furnished at first face of the electrolyte membrane; and
a second electrode catalyst layer furnished at second face of the electrolyte membrane;
wherein at least one of the first electrode catalyst layer and the second electrode catalyst layer is an electrode catalyst layer in accordance with any of claims 1 to 3.

5. A method of producing an electrode catalyst layer for a fuel cell, comprising the steps of:
(a) preparing a first dispersion that contains a catalyst, and a second dispersion that contains the catalyst; and
(b) applying the first dispersion onto a support in order to produce a first region contained in the electrode catalyst layer, and applying the second dispersion onto the support in order to produce a second region contained in the electrode catalyst layer,
wherein the second regions have higher water repellency than the first regions;
wherein application of the first dispersion and application of the second dispersion are carried out such that the amount of catalyst per unit area in the first region is smaller than the amount of catalyst per unit area in the second region.

6. The method of producing in accordance with claim 5 wherein
the coating weight of the first dispersion per unit area is made smaller than the coating weight of the second dispersion per unit area in order to make the amount of catalyst per unit area in the first region smaller than the amount of catalyst per unit area in the second region.
